Europäisches Patentamt

European Patent Office

Office européen des brevets

(19)

(11) **EP 1 531 279 A1**

(12) **EUROPÄISCHE PATENTANMELDUNG**

(43) Veröffentlichungstag:
18.05.2005 Patentblatt 2005/20

(51) Int Cl.⁷: **F16D 25/08**, F16D 48/04

(21) Anmeldenummer: 03025844.6

(22) Anmeldetag: **11.11.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(71) Anmelder: **Eisenbeis, Uwe**
**80809 München (DE)**

(72) Erfinder: **Eisenbeis, Uwe**
**80809 München (DE)**

(54) **Vorrichtung zur definierten Schlupferzeugung an Motorradschaltkupplungen**

(57)    Die hier dargestellte Erfindung soll im Schiebebetrieb, beim Bremsen oder bei Teillast die Kupplung so weit betätigen, dass das Hinterrad nicht ins Rutschen oder Springen kommt. Auch soll der Grad der Betätigung, sprich der "Schlupf" an der Kupplung individuell einstellbar oder auch dynamisch über eine Rechner-/ Steuereinheit während des Fahrbetriebs abhängig von dem jeweiligen Fahrzustand geregelt werden können. Damit können auch Lastwechsel vom Schiebebetrieb in Zugbetrieb reaktionsarm dargestellt werden. Auch kann eine Anfahrhilfe unter Einfluß der Drossel F und des Schaltventils G dargestellt werden. Einflussparameter für die Regelung der Einrichtung könnten hierbei Drosselklappenstellung, Saugrohrunterdruck, Vorder-/Hinterraddrehzahl, Beschleunigungs- oder Neigungssensoren sein.

Kernstück der Erfindung ist ein Nehmerzylinder C (Zeichnung 1-4), welcher zwei Nehmerkolben (Nehmerkolben Rutschkupplung C.1, Nehmerkolben Handarmatur C.2) besitzt, die von den zwei voneinander unabhängigen Hydraulikgebereinheiten Handarmatur komplett A und Gebereinheit Rutschkupplung B (Zeichnungen 1-4) betätigt werden. Die Nehmerkolben Rutschkupplung C.1 und der Nehmerkolben Handarmatur C.2 sind in Reihe hintereinander geschaltet, wobei diese nicht formschlüssig miteinander verbunden sind. Durch ein separates Einstellelement E kann hierbei der Hub des Nehmerkolbens Rutschkupplung C.1 und damit das übertragbare Moment der Kupplung beeinflusst werden.

Zeichnung 1

**EP 1 531 279 A1**

**Beschreibung**

## Inhaltsverzeichnis

| | |
|---|---|
| 1. Beschreibung / Sequenzprotokoll | 3 |
| 1.1 Anwendungsgebiet | 3 |
| 1.2 Stand der Technik | 4 |
| 1.3 Darstellung der Erfindung | 5 |
| 1.4 Ausführung mit Betätigung über Handarmatur komplett A und oder Gebereinheit Rutschkupplung B | 6 |
| 1.4.1 Zustand 1 (Zeichnung 1) : Kupplung nicht betätigt bei normalen Fahrbetrieb (Motor treibt Hinterrad an) oder Leerlauf bei nicht eingelegtem Gang | 6<br>6 |
| 1.4.2 Zustand 2 (Zeichnung 2): Kupplung manuell betätigt beim Schalten oder Anfahren oder stehen mit eingelegtem Gang bei laufendem Motor | 7<br>7 |
| 1.4.3 Zustand 3 (Zeichnung 3) : Kupplung per Rutschkupplungseinheit betätigt im Schubbetrieb oder beim Bremsen | 8<br>8 |
| 1.4.4 Zustand 4 : Kupplung per Handhebel und Rutschkupplungseinheit betätigt | 9<br>9 |
| 1.5 Betätigung nur über H andarmatur komplett A | 10 |
| 1.5.1 Zustand 1 (Zeichnung 5) : Kupplung nicht betätigt bei normalen Fahrbetrieb (Motor treibt Hinterrad an) oder Leerlauf bei nicht eingelegtem Gang | 10<br>10 |
| 1.5.2 Zustand 2 (Zeichnung 6) : Kupplung manuell betätigt beim Schalten oder Anfahren oder stehen mit eingelegtem Gang bei laufendem Motor | 11<br>11 |
| 1.5.3 Zustand 3 (Zeichnung 7) : Handhebel nach Betätigung wieder in Nullage | 12<br>12 |
| 2. Zusammenfassung | 13 |
| 3. Patentansprüche | 14 |

**Bildverzeichnis :**

**Zeichnung 1**    :Ausführung mit Betätigung über Handarmatur komplett A und oder Gebereinheit Rutschkupplung B. Zustand 1: Kupplung nicht betätigt bei normalem Fahrbetrieb (Motor treibt Hinterrad an) oder Leerlauf bei nicht eingelegtem Gang.

**Zeichnung 2**    :Ausführung mit Betätigung über Handarmatur komplett A und oder Gebereinheit Rutschkupplung B. Zustand 2 (Zeichnung 2): Kupplung manuell betätigt beim Schalten oder Anfahren oder stehen mit eingelegtem Gang bei laufendem Motor.

**Zeichnung 3**    :Ausführung mit Betätigung über Handarmatur komplett A und oder Gebereinheit Rutschkupplung B. Zustand 3 (Zeichnung 3) : Kupplung per Rutschkupplungseinheit betätigt im Schiebebetrieb oder beim Bremsen.

**Zeichnung 4** :Ausführung mit Betätigung über Handarmatur komplett A und oder Gebereinheit Rutschkupplung B. Zustand 4 (Zeichnung 4): Kupplung per Handhebel und Rutschkupplungseinheit betätigt

**Zeichnung 5** : Betätigung nur über Handarmatur komplett A. Zustand 1 (Zeichnung 5) : Kupplung nicht betätigt bei normalem Fahrbetrieb (Motor treibt Hinterrad an) oder Leerlauf bei nicht eingelegtem Gang.

**Zeichnung 6** :Betätigung nur über Handarmatur komplett A. Zustand 2 (Zeichnung 6) : Kupplung manuell betätigt beim Schalten oder Anfahren oder stehen mit eingelegtem Gang bei laufendem Motor.

**Zeichnung 7** :Betätigung nur über Handarmatur komplett A. Zustand 3 (Zeichnung 7) : Handhebel nach Betätigung wieder in Nulllage.

1. Beschreibung / Sequenzprotokoll

1.1 Anwendungsgebiet

Bei Motorrädern mit hubraumstarken Motoren und besonders in Verbindung mit niedrigen Zylinderzahlen (z. B. 2-Zylinder mit 1000ccm) tritt im Schiebebetrieb (d.h. Motor wird bei geschlossener Drosselklappe vom Hinterrad "angetrieben") ein hohes Motorbremsmoment auf. Das liegt vor allem an der geringen Motorschwungmasse und den hohen Verdichtungsverhältnissen bei Motorradmotoren. Dieses Motorbremsmoment kann dazu führen, insbesondere unter Berücksichtigung der ausgeprägten dynamischen Achslastverteilung bei Motorrädern, dass das Hinterrad ins Rutschen kommt oder in Verbindung mit Anregungen aus der Fahrbahnoberfläche zum Springen neigt. Diese Fahrzustände können ein erhebliches Sicherheitsrisiko darstellen.
Ziel dieser hier vorgestellten Vorrichtung für Schaltkupplungen an Motorrädern mit hydraulischer Betätigung ist es, im Schiebebetrieb und beim Bremsen die Kupplung so weit zu betätigen, dass ein definierter Schlupf an der Kupplung entsteht, wodurch das Bremsmoment am Hinterrad reduziert wird. Gleichzeitig soll mit dieser Einrichtung ein sanftes Lastwechselverhalten ermöglicht werde. Das bedeutet, dass der Übergang vom Schiebebetrieb (Hinterrad treibt Motor an) in den Zugbetrieb (Motor treibt Hinterrad an) sehr sanft und weich erfolgen kann. Auch kann eine Art Anfahrhilfe dargestellt werden, da diese Vorrichtung kurz vor dem vollständigen Einkuppeln mittels einer Drossel die Einkuppelgeschwindigkeit verringern und so ein Abwürgen des Motors verhindern kann. Auch ein automatisiertes Schalten kann mit dieser Einrichtung verwirklicht werden, d.h. es muß manuell keine Kupplung (Handhebel A.3) betätigt werden.

1.2 Stand der Technik

Derzeit befinden sich verschiedene Lösungen an Motorrädern um beim Bremsen, im Schiebebetrieb oder bei Lastwechseln einen gewissen Schlupf an der Kupplung zuzulassen. Es gibt zum einen Lösungen bei welchen ein Nocken am Kupplungskorb (D.4) im Schiebebetrieb im Sinne einer Entlastung der Außen- und Innenkupplungslamellen (D.6,D.7) wirkt, indem er die Druckplatte D.2 anhebt und damit einen definierten Schlupf erreicht. Diese Lösung ist allerdings auch meist starkem Verschleiß (besonders bei Trockenkupplungen) am Nocken ausgesetzt, da dort enorme Kräfte wirken.
Weiterhin sind Lösungen bekannt, bei welcher über eine Unterdruckmembran die Kupplung im Schiebebetrieb leicht betätigt und so das möglich zu übertragende Drehmoment reduziert wird, sprich Schlupf entsteht (vgl. AT403507B).
Da eine Schaltkupplung in der Regel bei voller Betätigung nur ca. 2 - 3 mm ausrückt ist der Weg der für diesen definierten Schlupf beim Bremsen oder Herunterschalten notwendig ist ca. 0,5 - 1 mm. Durch diese geringen Wege spielen bei rein mechanisch betätigten Einrichtungen auch Fertigungstoleranzen und der Kupplungsverschleiß eine große Rolle für eine optimale Funktion. Bei der hier vorgestellten Einrichtung sind diese Größen allerdings ohne Belang, da sich der Nehmerkolben Rutschkupplung C.1 und der Nehmerkolben Handarmatur C.2 ausschließlich über ein Kräftegleichgewicht in Nulllage positionieren und ohne mechanische Anschläge auskommen.
Zum anderen werden auch Freiläufe verwendet, die eine Drehmomentübertragung in nur eine Richtung zulassen. Das bedeutet aber auch gleichzeitig, dass der Motor nicht mehr als Motorbremse eingesetzt werden kann, oder aber auch ein Betrieb des Motors mit Schubabschaltung nicht mehr möglich ist.
Diese oben beschriebenen Einrichtungen werden meist als "Antihopping" Kupplung bezeichnet.
Weiterhin wird im Rennsport beim Bremsen und der dabei auftretenden dynamischen Radlastverteilung auf das Vorderrad oft die Motordrehzahl angehoben um ein zu starkes Abbremsen des Hinterrades beim Bremsen und Zurückschalten zu verhindern. Allerdings ist hierfür ein sensible Motorregelung erforderlich, z.B elektronische Drosselklappenansteuerung wie sie eher selten an Serienmotorrädern zu finden ist. Auch kann das Lastwechselverhalten dadurch nicht beeinflusst werden.

Alle diese Lösungen sind aber nur im Schubbetrieb in einem nicht oder nur sehr schwer steuerbaren Ausmaß wirksam. Auch kann der Grad der Drehmomentreduzierung nur schwer auf verschiedene Einsatzgebiete (z.B. Rennstreckenbetrieb) ohne aufwendige Umbauarbeiten an den Kupplungssystemen angepasst werden. Auch sind alle diese Systeme auf Mehrscheibenlamellenkupplungen ausgelegt, nicht aber für Ein- oder Zweischeibentrockenkupplungen wie sie z.B. bei einigen BMW oder Moto-Guzzi Motorrädern Verwendung finden.

1.3 Darstellung der Erfindung

Die hier dargestellte Erfindung soll bei Motorrädern im Schiebebetrieb, beim Bremsen oder bei Teillast die Kupplung so weit betätigen, dass das Hinterrad nicht ins Rutschen oder Springen kommt. Auch soll der Grad der Betätigung, sprich der "Schlupf" an der Kupplung individuell einstellbar oder auch dynamisch über eine Rechner-/ Steuereinheit während des Fahrbetriebs abhängig von dem jeweiligen Fahrzustand geregelt werden können. Einflussparameter könnten hierbei Drosselklappenstellung, Saugrohrunterdruck, Vorder-/Hinterraddrehzahl, Beschleunigungs- oder Neigungssensoren sein. Parallel dazu soll ein ruckfreies Anfahren aus dem Stand, sowie ein weiches und sanftes Lastwechselverhalten möglich sein. Auch soll damit ein automatisiertes Schalten ermöglicht werden. Dabei wäre denkbar, dass der Fahrer nur noch den Schalthebel betätigt, die Kupplung dann automatisch über die Gebereinheit Rutschkupplung B betätigt wird.

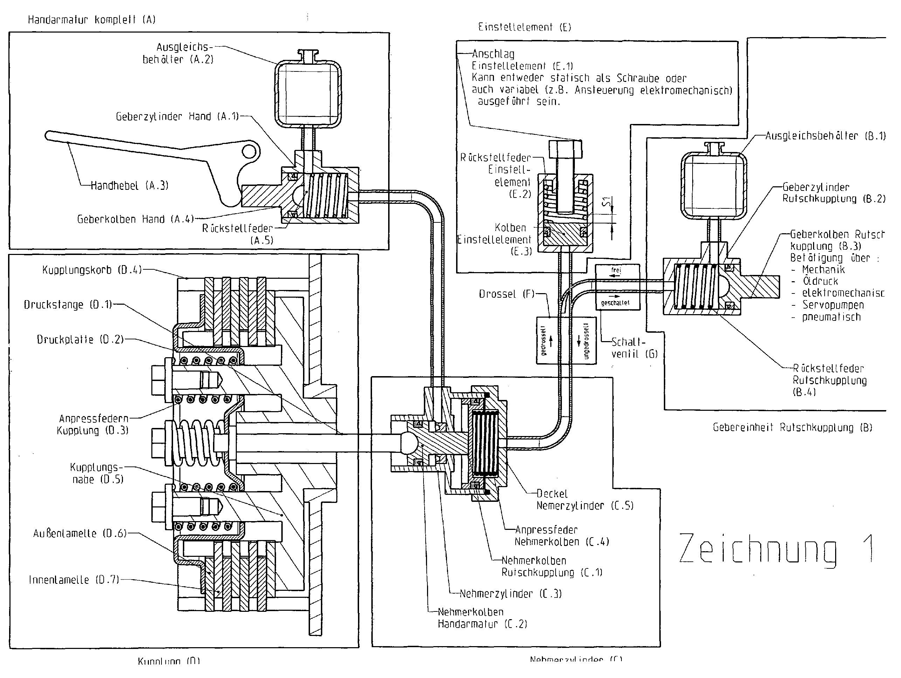

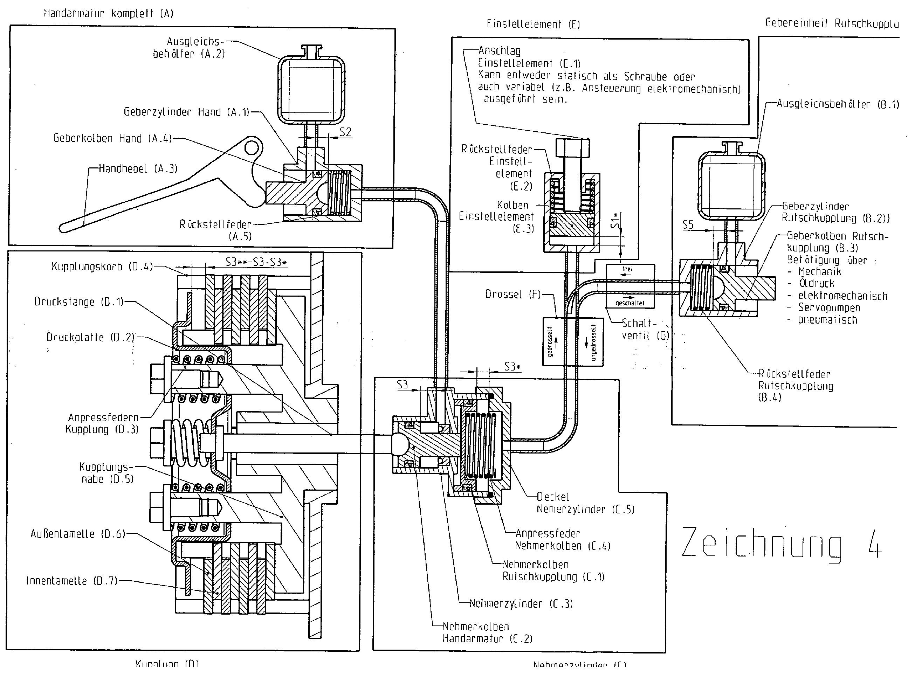

Kernstück der Erfindung ist ein Nehmerzylinder C ( Zeichnung 1-7), welcher zwei Nehmerkolben (Nehmerkolben Rutschkupplung C.1, Nehmerkolben Handarmatur C.2) besitzt, die von zwei voneinander unabhängigen Hydraulikgebereinheiten (Handarmatur komplett A und Gebereinheit Rutschkupplung B, Zeichnungen 1-4) betätigt werden. Der Nehmerkolben Rutschkupplung C.1 und der Nehmerkolben Handarmatur C.2 sind in Reihe hintereinander geschaltet, wobei diese nicht formschlüssig miteinander verbunden sind. Durch ein separates Einstellelement Block E (Zeichnung 1-7) kann hierbei der Hub des Nehmerkolben Rutschkupplung C.1 und damit das übertragbare Moment der Kupplung beeinflusst werden.

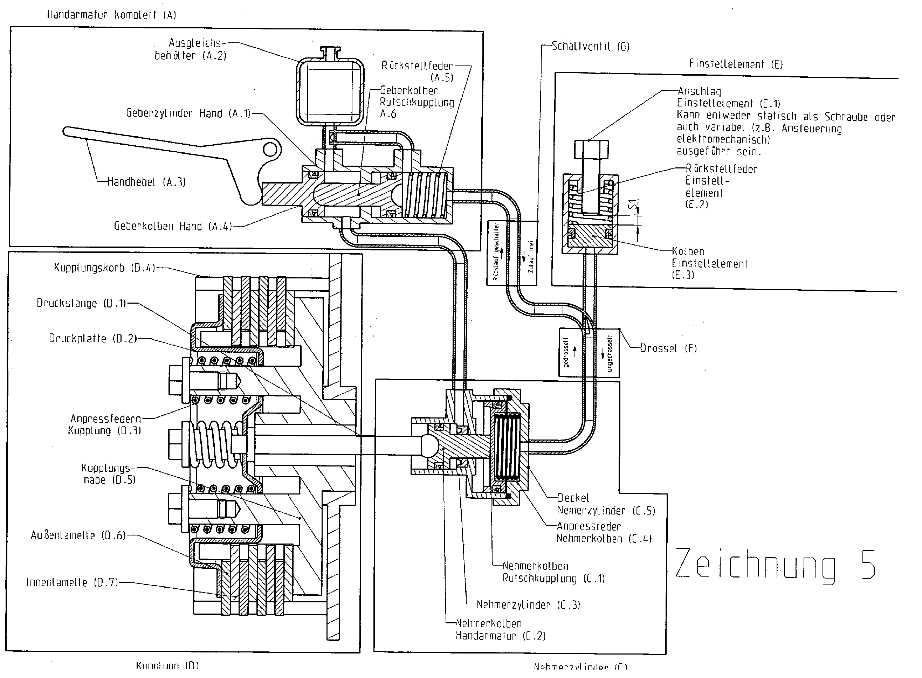

Auch kann die Betätigung des Nehmerkolben Rutschkupplung C.1 und Nehmerkolben Handarmatur C.2 durch eine einzelne Hydraulikgebereinheit (Handarmatur komplett A, Zeichnung 5 - 7) mit zwei hintereinander geschalten Geberkolben Hand A.4 und Geberkolben Rutschkupplung A.6, die nicht formschlüssig miteinander verbunden sind, erfolgen. Der Geberkolben Hand A.4 und der Geberkolben Rutschkupplung A.6 können dabei auch parallel angeordnet sein. Allerdings kann hierbei keine Lastwechselregelung erfolgen ohne den Handhebel A.3 nicht mindestens einmal gezogen zu haben. Ein automatisiertes Schalten ist damit auch nicht möglich.

Im folgenden soll die Funktion der Erfindung anhand der Zeichnungen 1-7 erklärt werden. Da die Ausrückwege einer Schaltkupplung (S3) in der Regel nur bei 2 -3 mm bei voller Betätigung liegen, sind die Ausrückwege S3, S3* und S3** zur besseren Verdeutlichung in den Zeichnungen 1-7 übertrieben groß dargestellt.

1.4 Ausführung mit Betätigung über Handarmatur komplett A und oder Gebereinheit Rutschkupplung B

Hier werden der Nehmerkolben Rutschkupplung C.1 und Nehmerkolben Handarmatur C.2 von zwei voneinander unabhängigen Hydraulikgebereinheiten (Handarmatur komplett A, Gebereinheit Rutschkupplung B, Zeichnung 1-4) betätigt. Die Handarmatur komplett A wird hierbei konventionell vom Fahrer bedient, die Gebereinheit Rutschkupplung B ausschließlich fahrerunabhängig in Abhängigkeit verschiedener Parameter.

1.4.1

Zustand 1 (Zeichnung 1) : Kupplung nicht betätigt bei normalen Fahrbetrieb (Motor treibt Hinterrad an) oder Leerlauf bei nicht eingelegtem Gang.

In diesem Zustand ist sowohl bei der Handarmatur komplett A als bei der Gebereinheit Rutschkupplung B der Geberkolben Hand A.4 und der Geberkolben Rutschkupplung B.3 durch die Anpresskraft der Rückstellfeder Rutschkupplung B.4 und Rückstellfeder A.5 in Nulllage. Auch der Kolben Einstellelement E.3 am Einstellelement E ist in Nulllage durch die Anpresskraft der Rückstellfeder Einstellelement E.2. Dadurch sind die Leitungen AC und BC drucklos. D.h . der Nehmerkolben Rutschkupplung C.1 wird nur über die Anpressfeder Nehmerkolben C.4 an den Nehmerkolben Handarmatur C.2 gedrückt. Auf Grund der Federbelastung an der Kupplung D durch die Anpressfedern Kupplung D.3 bewegen sich der Nehmerkolben Rutschkupplung C.1 und der Nehmerkolben Handarmatur C.2 aber nicht aus ihrer Ruhelage, da die Anpresskraft der Anpressfedern Kupplung D.3 um ein vielfaches höher ist als die der Anpressfeder Nehmerkolben C.4. Die Anpressfeder Nehmerkolben C.4 besitzt nur eine sehr niedrige Federrate, da sie ausschließlich dazu dient die Anlage der Nehmerkolben Rutschkupplung C.1 und Nehmerkolben Handarmatur C. 2 spielfrei zu halten. Auch muß der Verschleiß der Kupplungsaußenlamellen D.6 und Kupplungsinnenlamellen D.7 ausgeglichen werden können. Durch diesen Verschleißausgleich ist auch stets eine optimale Funktion der Rutschkupplung mit immer dem gleichen voreingestellten Wert möglich.

Die Kupplung D kann also in diesem Zustand die Anpresskraft der Anpressfedern Kupplung D.3 über die Druckplatte D.2 auf die Außen- und Innenkupplungslamellen D.6,D.7 übertragen. Damit ist der vom Motor angetriebene Kupplungskorb D.4 kraftschlüssig mit der Kupplungsnabe D.5, welche formschlüssig auf der Getriebeeingangswelle sitzt, verbunden. Dadurch kann das maximale konstruktiv vorgesehene Drehmoment übertragen werden.

1.4.2

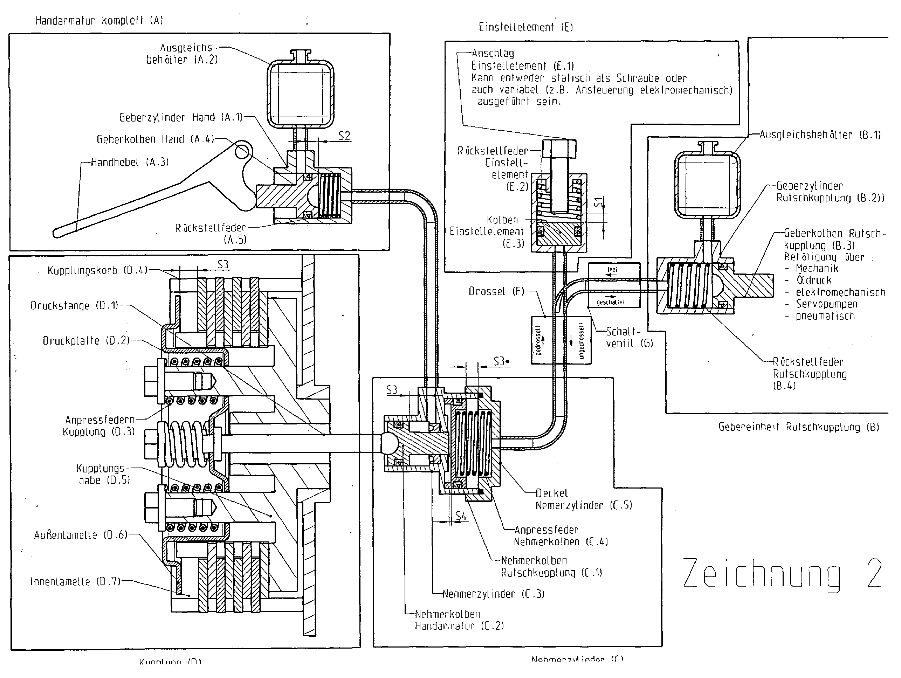

Zustand 2 (Zeichnung 2): Kupplung manuell betätigt beim Schalten oder Anfahren oder stehen mit eingelegtem Gang bei laufendem Motor.

In diesem Zustand wird an der Handarmatur komplett A durch Betätigen des Handhebels A.3 der Geberkolben Hand A.4 entgegen der Rückstellfeder A.5 um den Weg S2 verschoben. Der dadurch in der Leitung AC entstehende Druck bewirkt, daß der Nehmerkolben Handarmatur C.2 um den entsprechenden Weg S2 verschoben wird. Zur Vereinfachung sind die Wege (S2 = S3) des Geberkolben Hand A.4 und des Nehmerkolben Rutschkupplung C.2 bei den drei Beispielen hier gleich angesetzt, in der Realität verändert sich der Weg aber entsprechend der hydraulischen Übersetzungen.
Der Nehmerkolben Handarmatur C.2 bewegt dabei über die Druckstange D.1 entgegen den Anpreßfedern Kupplung D.3 die Druckplatte D.2 um den Weg S3. Dadurch sind die Außen- und Innenkupplungslamellen D.6,D.7 der Kupplung drucklos und die Kupplung trennt. Die Kupplung D kann also in diesem Zustand die Anpresskraft der Federn D.3 über die Druckplatte D.2 auf die Außen- und Innenkupplungslamellen D.6,D.7 nicht übertragen. Damit ist der vom Motor angetriebene Kupplungskorb D.4 nicht mehr kraftschlüssig mit der Kupplungsnabe D.5, welche formschlüssig auf der Getriebeeingangswelle sitzt, verbunden. Dadurch kann kein Drehmoment übertragen werden.

Der Nehmerkolben Rutschkupplung C.1 rückt in diesem Zustand durch die Anpressfeder Nehmerkolben C.4 beaufschlagt bis zum Aufliegen an den Nehmerzylinder C.3 nach, ist dabei aber ohne Funktion für das Betätigen der Kupplung. Hierbei kann auch der Kraftschluss der Nehmerkolben Handarmatur C.1 und Nehmerkolben Rutschkupplung C.2 unterbrochen werden ( Maß S4). Die für diesen Weg benötigte Ausgleichsmenge Flüssigkeit stammt aus dem Ausgleichsbehälter B.1.

Bewegt der Fahrer den Handhebel A.3 wieder in die Ausgangslage zurück, so tritt wieder der Zustand 1 (Zeichnung 1) ein. Hierbei bewegt sich der Nehmerkolben Handarmatur C.2 analog zum Geberkolben Hand A.4 so lange, bis die durch die Federn beaufschlagte Druckplatte D.2 auf den Außen- und Innenkupplungslamellen D.6,D.7 zum Liegen kommt. Dabei drückt der Nehmerkolben Handarmatur C.2 nach Überbrücken der Strecke S4 den Nehmerkolben Rutschkupplung C.1 zurück in die Ausgangslage nach Zustand 1. Beim Einbau einer Drossel F in die Rücklaufleitung wird zusätzlich dafür Sorge getragen, dass nachdem der Nehmerkolben Handarmatur C.2 die Strecke S4 zurückgelegt hat, die weitere Bewegung bis zur Ausgangslage nach Zustand 1 verlangsamt ausgeführt wird, wodurch ein leichtes Anfahren ermöglicht wird. Diese Drossel kann manuell fix einstellbar oder regelbar ausgeführt werden. Ohne die Drossel F ist der Einfluß beim manuellen Kuppeln des Nehmerkolbens Rutschkupplung C.1 auf die Dosierung nicht vorhanden.

1.4.3

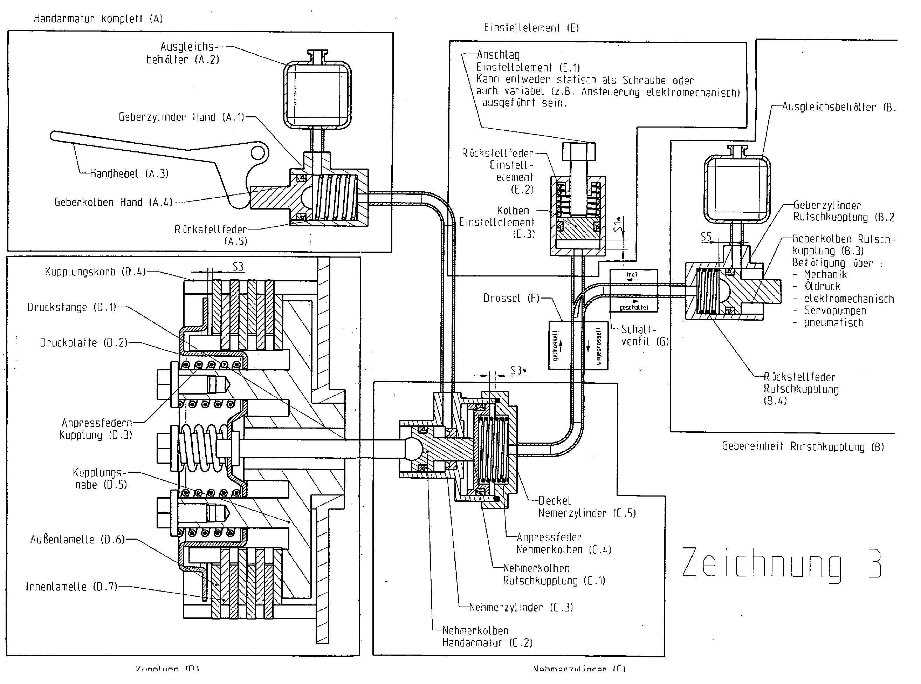

Zustand 3 (Zeichnung 3) : Kupplung per Rutschkupplungseinheit betätigt im Schubbetrieb oder beim Bremsen.

In diesem Zustand wird an der Gebereinheit der Rutschkupplung B der Geberkolben Rutschkupplung B.3 entgegen der Rückstellfeder Rutschkupplung B.4 um den Weg S5 verschoben. Dies kann per Mechanik , elektromechanisch, hydraulisch per Motoröldruck, pneumatisch oder auch durch separate Druckpumpen erfolgen. Auch bestehende Hydrauliksystempumpen z.B. von Servobremsen können zur Beaufschlagung des Geberkolbens Rutschkupplung B.3 verwendet werden. Hierbei wäre es sogar möglich die komplette Gebereinheit Rutschkupplung B.2 wegzulassen. Bis auf rein mechanische Systeme ist allerdings immer eine Rechnereinheit mit diversen Sensoren (Raddrehzahlen, Drosselklappenposition, Saugrohrdruck oder andere sinnvolle Parameter) zur Ansteuerung notwendig. Da der Ausrückweg für diesen "Schlupf" an der Kupplung mit ca. 0,5 - 1 mm sehr niedrig ist, kann die Betätigungkraft für den Geberkolben Rutschkupplung B.3 durch entsprechende hydraulische Übersetzungsverhältnisse zwischen dem Durchmesser des Geberkolbens Rutschkupplung B.3 und des Nehmerkolben Rutschkupplung C.1 sehr niedrig ausfallen.
Der durch die Bewegung des Geberkolbens Rutschkupplung B.3 in der Leitung AC entstehende Druck bewirkt, das der Nehmerkolben Rutschkupplung C.1 um den entsprechenden Weg S3* und der Kolben Einstellelement E.3 im Einstellelement E um den Weg S1* bis zum Anschlag Einstellelement E.1 verschoben wird. Daraus wird ersichtlich, dass der Ausrückweg am Nehmerkolben Rutschkupplung C.1 von der Position des Anschlag Einstellelement E.1 abhängt. D.h. der Ausrückweg des Nehmerkolbens Rutschkupplung C.1 S3* setzt sich wie folgt zusammen : S3* = S4-S1*. Wird also die Position des Anschlags Einstellelement E.1 verändert und damit S1* vergrößert, so verkleinert sich S3* und die Kupplung rutscht weniger leicht durch. Bei dieser Regelung ist der Hub S5 des Geberkolbens Rutschkupplung B.3 immer maximal und der entsprechende Weg S3* des Nehmerkolbens Rutschkupplung C.1 (Zeichnung 3) hängt lediglich von der Position des Anschlags Einstellelement E. 1 im Einstellelement E ab. Dieses Einstellelement kann bei einem variablen steuerbaren Hub S5 des Geberkolbens Rutschkupplung B.3 entfallen.

Der Nehmerkolben Rutschkupplung C.1 bewegt dabei über die Druckstange D. 1 entgegen den Anpreßfedern D.3 die Druckplatte D.2 um den Weg S3*. Dadurch sind die Außen- und Innenkupplungslamellen D.6,D.7 der Kupplung nicht vollständig drucklos und die Kupplung trennt nur leicht. Die Kupplung D kann also in diesem Zustand die Anpresskraft der Anpressfedern Kupplung D.3 über die Druckplatte D.2 auf die Außen- und Innenkupplungslamellen D.6,D. 7 nur teilweise übertragen. Damit ist der Kraftschluß zwischen dem vom Motor angetriebenen Kupplungskorb D.4 und der Kupplungsnabe D.5 herabgesetzt. Dadurch kann nur noch ein vermindertes Drehmoment schlupffrei übertragen werden. Bei Übersteigung dessen rutscht die Kupplung durch.

Der Nehmerkolben Handarmatur C.2 wird in diesem Zustand durch Nehmerkolben Rutschkupplung C.1 mitbewegt, da dieser als unmittelbares Übertragungselement zur Druckstange D. 1 dient. Die für diesen Weg benötigte Ausgleichsmenge Flüssigkeit stammt aus dem Ausgleichsbehälter A.2.

1.4.4

Zustand 4 : Kupplung per Handhebel und Rutschkupplungseinheit betätigt

Wird parallel zum Bremsen noch Heruntergeschaltet, d.h. die Kupplung zusätzlich manuell betätigt, so überlagert sich der Zustand 3 mit Zustand 2 und der Ausrückweg an der Kupplung setzt sich wie folgt zusammen :

$$S3**=S3*+S3$$

S3** ist hierbei die Summe aus Hub der Nehmerkolbens Handarmatur C.2 (S3) aus Zustand1 und Hub des Nehmerkolbens Rutschkupplung C.1 (S3*) aus Zustand 2.

So wäre auch beim "Zwischeneinkuppeln" beim Herunterschalten die Kupplung immer mit dem eingestellten Schlupfmoment beaufschlagt.

Um beim Übergang vom Schiebebetrieb (Hinterrad treibt Motor an) in den Zugbetrieb (Motor treibt Hinterrad an) , beim sogenannten "Lastwechsel" möglichst wenig Unruhe ins Fahrzeug zu bringen könnte eine zusätzliche Drossel F in der Leitung BC (siehe Zeichnung 1-4) untergebracht werden. In Richtung BC (Auskuppeln) ist dieses ohne Drosselwirkung, in Richtung CB (Einkuppeln) baut sich der Druck nur langsam ab, wodurch sanfte Lastwechsel ermöglicht werden. Auch eine Anfahrhilfe könnte so dargestellt werden. Parallel dazu könnte der Druckabbau in der Leitung CB zusätzlich über ein Schaltventil G gesteuert werden.

1.5 Betätigung nur über Handarmatur komplett A

Hier gibt es nur eine Gebereinheit, die Handarmatur komplett A. Diese ist als sogenannter "Tandemgeberzylinder" ausgeführt, d.h. der Geberkolben Hand A.4 und der Geberkolben Rutschkupplung A.6 sind hintereinander (in Reihe) oder nebeneinander (parallel, hier nicht separat dargestellt) angebracht (Zeichnung 5-7, Block A). Diese Ausführung hat allerdings den Nachteil, dass ausschließlich beim Ziehen des Handhebels A.3 (z.B. Kuppeln beim Herunterschalten) die Rutschkupplung aktiv werden kann. Lastwechsel aus dem Übergang von Schiebebetrieb in Zugbetrieb können, ohne nicht mindestens einmal den Handhebel A.3 (z.B. beim gleichzeitigen Zurückschalten) bedient zu haben, damit nicht kompensiert werden. Auch wäre ein automatisiertes Schalten nicht möglich.

Eine Anfahrhilfe wäre damit allerdings darstellbar.

Da zum Anfahren mindestens einmal die der Handhebel A.3 bedient werden muß, kann auch damit eine Anfahrhilfe dargestellt werden.

Die Funktionsweise soll nun anhand verschiedener Betriebszustände erläutert werden.

1.5.1

Zustand 1 (Zeichnung 5) : Kupplung nicht betätigt bei normalen Fahrbetrieb (Motor treibt Hinterrad an) oder Leerlauf bei nicht eingelegtem Gang.

In diesem Zustand sind bei der Handarmatur komplett A die Geberkolben Hand A.4 und der Geberkolben Rutschkupplung A.6 durch die Anpresskraft der Rückstellfeder A.5 in Nulllage. Auch der Kolben Einstellelement E.3 am Einstellelement E ist in Nulllage durch die Anpresskraft der Rückstellfeder Einstellelement E.2. Dadurch sind die Leitungen AC drucklos. D.h . der Nehmerkolben Rutschkupplung C.1 wird nur über die Anpressfeder Nehmerkolben C.4 an den Nehmerkolben Handarmatur C.2 gedrückt. Auf Grund der Federbelastung an der Kupplung durch die Anpressfedern Kupplung D.3 bewegen sich die Nehmerkolben Rutschkupplung C.1 und der Nehmerkolben Handarmatur C.2 aber nicht aus Ihrer Ruhelage, da die Anpresskraft der Anpressfedern Kupplung D.3 um ein vielfaches höher ist als an der Anpressfeder Nehmerkolben C.4. Die Anpressfeder Nehmerkolben C.4 besitzt nur eine sehr niedrige Federrate, da sie ausschließlich dazu dient die Anlage der Nehmerkolben Handarmatur und Rutschkupplung C.2, C.1 spielfrei zu halten. Auch muß der Verschleiß der Außen- und Innenkupplungslamellen D.6 und D.7 ausgeglichen werden können.

Die Kupplung D kann also in diesem Zustand die Anpresskraft der Anpreßfedern Kupplung D.3 über die Druckplatte D.2 auf die Außen- und Innenkupplungslamellen D.6,D.7 übertragen. Damit ist der vom Motor angetriebene Kupplungskorb D.4 kraftschlüssig mit der Kupplungsnabe D.5, welche formschlüssig auf der Getriebeeingangswelle sitzt, verbunden. Dadurch kann das maximale konstruktiv vorgesehene Drehmoment übertragen werden.

1.5.2

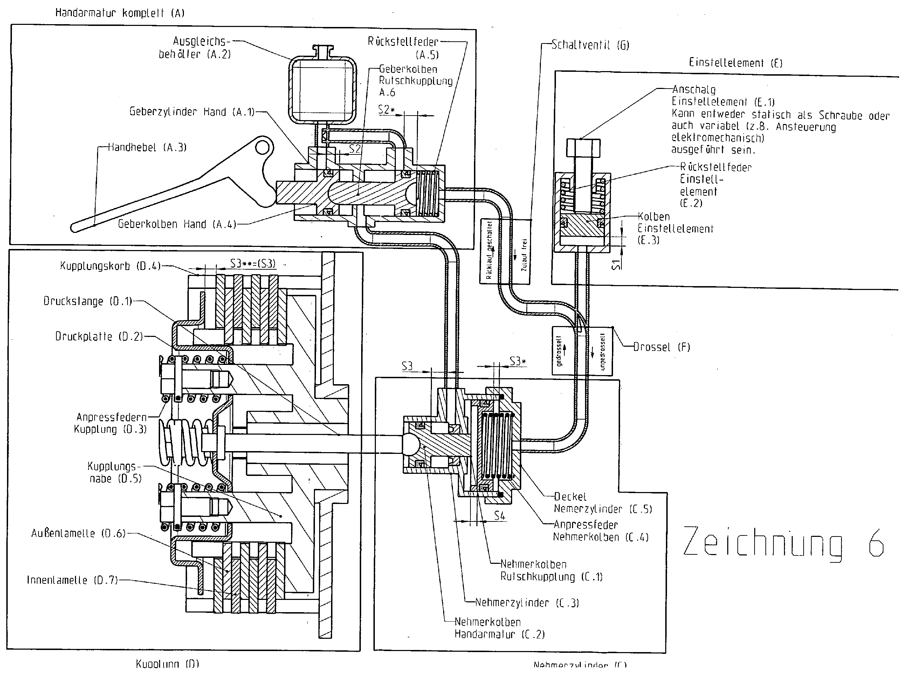

Zustand 2 (Zeichnung 6) : Kupplung manuell betätigt beim Schalten oder Anfahren oder stehen mit eingelegtem Gang bei laufendem Motor.

In diesem Zustand werden an der Handarmatur komplet tA durch Betätigen des Handhebels A.3 die Geberkolben Handarmatur A.4 und der Geberkolben Rutschkupplung A.6 entgegen der Rückstellfeder A.5 um den Weg S2 verschoben. Der dadurch entstehende Druck bewirkt, das die Nehmerkolben Handarmatur C.2 und der Nehmerkolben Rutschkupplung C.1 um den entsprechenden Weg S3 und S3* verschoben werden. Die Strecken S3 und S3* sind der hydraulischen Übersetzung zwischen Geberkolben Handarmatur A.4, Geberkolben Rutschkupplung A.6 und den Nehmerkolben Rutschkupplung C.1, Nehmerkolben Handarmatur C.2 entsprechend gleich oder unterschiedlich. Der Ausrückweg S3 des Nehmerkolbens Handarmatur C.2 ist dabei für das Trennen an der Kupplung (Block D) bei der Betätigung des Handhebels A.3 verantwortlich.

Der Nehmerkolben Handarmatur C.2 bewegt dabei über die Druckstange D.1 entgegen den Anpressfedern Kupplung D.3 die Druckplatte D.2 um den Weg S3. Dadurch sind die Außen- und Innenkupplungslamellen D.6,D.7 der Kupplung drucklos und die Kupplung trennt. Die Kupplung D kann also in diesem Zustand die Anpresskraft der Anpressfedern Kupplung D.3 über die Druckplatte D.2 auf die Lamellen D.6,D.7 nicht übertragen. Damit ist der vom Motor angetriebene Kupplungskorb D.4 nicht mehr kraftschlüssig mit der Kupplungsnabe D.5, welche formschlüssig auf der Getriebeeingangswelle sitzt, verbunden. Dadurch kann kein Drehmoment übertragen werden.

Der Nehmerkolben Rutschkupplung C.1 rückt in diesem Zustand um den Weg S3$^*$ entsprechend dem hydraulischen Übersetzungsverhältnis zwischen Geberkolben Rutschkupplung A.6 und Nehmerkolben Rutschkupplung C.1 vor, ohne aber Einfluß auf den Ausrückweg der Druckplatte D.2 zu haben. Hierbei kann auch der Kraftschluss der Nehmerkolben Rutschkupplung C.1 und Nehmerkolben Handarmatur C.2 unterbrochen werden (Maß S4). Die für diesen Weg benötigte Ausgleichsmenge Flüssigkeit stammt aus dem Ausgleichsbehälter B.1.

Die Strecke S3* des Nehmerkolbens Rutschkupplung C.1 wird zusätzlich durch das Einstellelement E beeinflusst. Der durch die Bewegung des Geberkolbens Rutschkupplung A.6 in der Leitung AC entstehende Druck bewirkt, das der Nehmerkolben Rutschkupplung C.1 um den entsprechenden Weg S3* und der Kolben Einstellelement E.3 im Einstellelement E um den Weg S1* bis zum Anschlag Einstellelement E. 1 verschoben wird. Daraus wird ersichtlich, dass der Ausrückweg am Nehmerkolben Rutschkupplung C.1 von der Position des Kolbens Einstellelement E.3 des Einstellelementes E abhängt. Wird also der Weg des Einstellelementes S1* vergrößert, so verkleinert sich S3*.

1.5.3

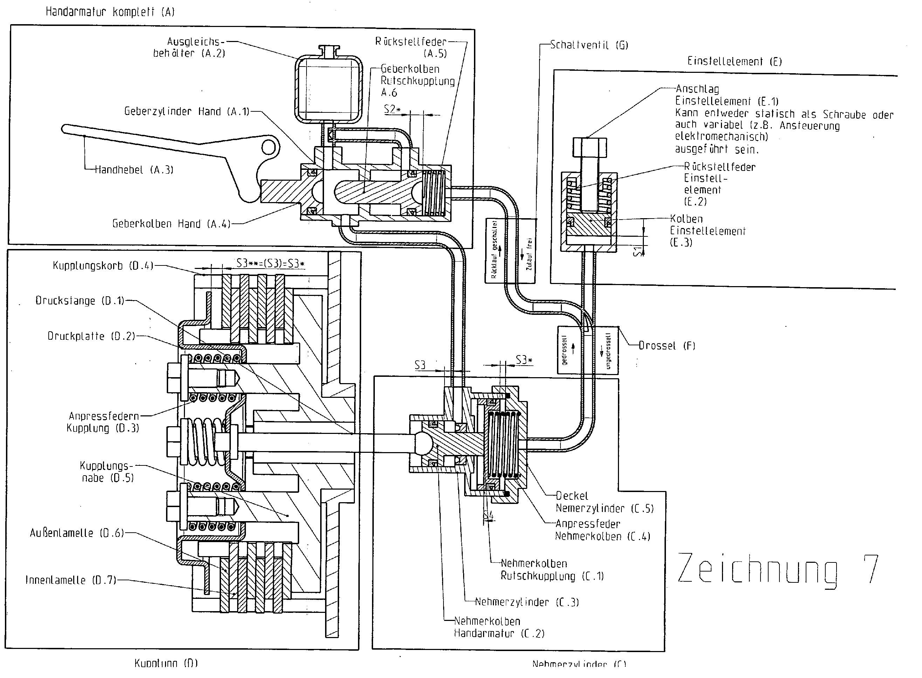

Zustand 3 (Zeichnung 7) : Handhebel nach Betätigung wieder in Nullage.

Wird nach Betätigen des Handhebels A.3 dieser wieder in seine Ausgangslage nach Zustand 1 (Zeichnung 5) zurückgeführt, so wandert der Nehmerkolben Handarmatur C.2 bis zum Aufliegen an Nehmerkolben Rutschkupplung C.1 durch die Federkraft der Anpressfedern Kupplung D.3 zurück. Das bedeutet, dass der Ausrückweg an der Druckplatte D.2 S3**=S3* nach Zeichnung 7 ist. Der Nehmerkolben Rutschkupplung C.1 kann aufgrund der Sperrwirkung des Schaltventils G nicht zurückweichen. Dieses Schaltventil G ist beim Zulauf nach Zustand 2 ohne Funktion, verhindert aber beim Loslassen des Handhebels A.3 nach Zustand 3 (Zeichnung 7) ein Zurückdrücken des Nehmerkolbens Rutschkupplung C.1 aufgrund der Anpressfedern Kupplung D.3. Diese Schaltventil kann mechanisch oder elektronisch angesteuert werden. Einflußparameter könnten hierbei Raddrehzahlen, Drosselklappenposition, Saugrohrunterdruck, Fahrstufe, Beschleunigungssensoren o.ä. sein.

Die Druckplatte bleibt also um den Weg S3* ausgerückt. Dadurch sind die Außen- und Innenkupplungslamellen D.6,D.7 der Kupplung nicht vollständig drucklos und die Kupplung trennt nur leicht. Die Kupplung D kann also in diesem Zustand die Anpresskraft der Anpressfedern Kupplung D.3 über die Druckplatte D.2 auf die Außen- und Innenkupplungslamellen D.6,D.7 nur teilweise übertragen. Damit ist der Kraftschluß zwischen dem vom Motor angetriebenen Kupplungskorb D.4 und der Kupplungsnabe D.5 (Getriebeeingang) herabgesetzt. Dadurch kann nur noch ein vermindertes Drehmoment schlupffrei übertragen werden. Bei Übersteigung dessen rutscht die Kupplung durch.

Ist der Bremsvorgang und das damit verbundene Herunterschalten beendet, so schaltet das Schaltventil G durch und der Nehmerkolben Rutschkupplung C.1 wandert in seine Ausgangslage nach Zustand 1 (Zeichnung 5) zurück. Auch können nun die Geberkolben Rutschkupplung A.6 und der Kolben Einstellelement E.3 in Ihre Ausgangslage nach Zustand 1 (Zeichnung 5) zurückkehren. Um einen sanften Übergang in diesen Zustand zu schaffen, kann ein zusätzliches Drosselventil F verbaut werden. Dieses Drosselventil F ist beim Zulauf nach Zustand 2 ohne Funktion verhindert aber beim Loslassen des Handhebels A.3 nach Zustand 3 (Zeichnung 7) ein schnelles Zurückdrücken des Nehmerkolbens Rutschkupplung C.1 aufgrund der Anpressfedern Kupplung D.3.

Dadurch würde diese Anordnung auch hervorragend als Anfahrhilfe funktionieren, da ein zu abruptes Einkuppeln und damit ein Absterben des Motors verhindert werden könnten.

**Patentansprüche**

1. Schaltkupplung, welche von zwei voneinander unabhängigen Hydraulikkreisen betätigt wird. Kernstück ist ein Nehmerzylinder C mit zwei nicht formschlüssig in Reihe geschalteten Nehmerkolben Rutschkupplung C.1 und Nehmerkolben Handarmatur C.2. Hierbei kann der Geberkolben Rutschkupplung B.3 im Hub variabel mechanisch, elektromechanisch, pneumatisch, hydraulisch per Öldruck (Motor, Getriebe) oder seperater Hydraulikpumpe betätigt werden.

2. Vorrichtung nach 1. mit zusätzlichem Einstellelement E, welches manuell oder dynamisch per Stellmotor abhängig von Fahrzustands und Motorparametern angesteuert wird. Hierbei ist der Hub des Geberkolben Rutschkupplung B.3 immer maximal, d.h. nur der Anschlag Einstellelement E. 1 beeinflußt den Hub des Nehmerkolbens Rutschkupplung C.2

3. Vorrichtung nach 1. oder 2. mit einer zusätzlichen Drossel in der Leitung BC . In Richtung BC ist diese ohne Drosselwirkung, in Richtung CB baut sich der Druck nur langsam ab, wodurch sanfte Lastwechsel ermöglicht werden.

4. Vorrichtung nach 1.,3. wobei der Nehmerkolben Rutschkupplung C.1 direkt mechanisch, elektromechanisch pneumatisch oder hydraulisch mit variablem oder fixem Hub betätigt wird.

5. Vorrichtung nach 1., 2., 3., 4., ergänzt mit einem Schaltventil G welches mechanisch oder elektronisch betätigt werden kann.

6. Schaltkupplung mit nur einer Hydraulikgebereinheit, der Handarmatur komplett A, mit zwei Geberkolben, den Geberkolben Handarmatur A.4 und den Geberkolben Rutschkupplung A.6, die in Reihe oder parallel angeordnet sein können. Kernstück ist ein Nehmerzylinder C mit zwei nicht formschlüssig in Reihe geschalteten Nehmerkolben Rutschkupplung C.1 und Nehmerkolben Handarmatur C.2 und zwei in Reihe nicht formschlüssig miteinander verbundenen Geberkolben Handarmatur A.4 und Geberkolben Rutschkupplung A.6

7. Vorrichtung nach 6. mit zusätzlichem Einstellelement E, welches manuell oder dynamisch per Stellmotor abhängig von Fahrzustands und Motorparametern angesteuert wird

8. Vorrichtung nach 6. und 7. mit einer zusätzlichen Drossel F in der Leitung von der Handarmatur A zum Nehmerzylinder C.

9. Vorrichtung nach 6., 7., 8. ergänzt mit einem Schaltventil G welches mechanisch oder elektronisch betätigt werden kann.

Handarmatur komplett (A)

Ausgleichsbehälter (A.2)

Geberzylinder Hand (A.1)

Handhebel (A.3)

Geberkolben Hand (A.4)

Rückstellfeder (A.5)

Kupplungskorb (D.4)

Druckstange (D.1)

Druckplatte (D.2)

Anpressfedern Kupplung (D.3)

Kupplungs-nabe (D.5)

Außenlamelle (D.6)

Innenlamelle (D.7)

Kupplung (D)

Einstellelement (E)

Anschlag Einstellelement (E.1)
Kann entweder statisch als Schraube oder
auch variabel (z.B. Ansteuerung elektromechanisch)
ausgeführt sein.

Rückstellfeder Einstell-element (E.2)

Kolben Einstellelement (E.3)

S1

Drossel (F)

frei

geschaltet

gedrosselt

ungedrosselt

Schalt-ventil (G)

Ausgleichsbehälter (B.1)

Geberzylinder Rutschkupplung (B.2)

Geberkolben Rutschkupplung (B.3)
Betätigung über :
- Mechanik
- Öldruck
- elektromechanisc
- Servopumpen
- pneumatisch

Rückstellfeder Rutschkupplung (B.4)

Gebereinheit Rutschkupplung (B)

Deckel Nemerzylinder (C.5)

Anpressfeder Nehmerkolben (C.4)

Nehmerkolben Rutschkupplung (C.1)

Nehmerzylinder (C.3)

Nehmerkolben Handarmatur (C.2)

Nehmerzylinder (C)

Zeichnung 1

Zeichnung 2

Handarmatur komplett (A)

- Ausgleichsbehälter (A.2)
- Geberzylinder Hand (A.1)
- Geberkolben Hand (A.4)
- Handhebel (A.3)
- Rückstellfeder (A.5)

S2

Einstellelement (E)

- Anschlag Einstellelement (E.1) Kann entweder statisch als Schraube oder auch variabel (z.B. Ansteuerung elektromechanisch) ausgeführt sein.
- Rückstellfeder Einstell-element (E.2)
- Kolben Einstellelement (E.3)

S1

Ausgleichsbehälter (B.1)

Geberzylinder Rutschkupplung (B.2)

Geberkolben Rutschkupplung (B.3) Betätigung über:
- Mechanik
- Öldruck
- elektromechanisch
- Servopumpen
- pneumatisch

Rückstellfeder Rutschkupplung (B.4)

Gebereinheit Rutschkupplung (B)

Schalt-ventil (G)

frei
geschaltet

ungedrosselt
gedrosselt

Drossel (F)

Deckel Nemerzylinder (C.5)

Anpressfeder Nehmerkolben (C.4)

Nehmerkolben Rutschkupplung (C.1)

Nehmerzylinder (C.2)

Nehmerkolben Handarmatur (C.3)

S3*

S3

S4

Nehmerzylinder (C)

Kupplungskorb (D.4)

Druckstange (D.1)

Druckplatte (D.2)

Anpressfedern Kupplung (D.3)

Kupplungs-nabe (D.5)

Außenlamelle (D.6)

Innenlamelle (D.7)

S3

Kupplung (D)

Handarmatur komplett (A)

Einstellelement (E)

Ausgleichsbehälter (A.2)

Geberzylinder Hand (A.1)

Handhebel (A.3)

Geberkolben Hand (A.4)

Rückstellfeder
(A.5)

Anschlag
Einstellelement (E.1)
Kann entweder statisch als Schraube oder
auch variabel (z.B. Ansteuerung elektromechanisch)
ausgeführt sein.

Rückstellfeder
Einstellelement
(E.2)

Kolben
Einstellelement
(E.3)

S1*

S5

Ausgleichsbehälter (B.

Geberzylinder
Rutschkupplung (B.2

Geberkolben Rutschkupplung (B.3)
Betätigung über :
- Mechanik
- Öldruck
- elektromechanisch
- Servopumpen
- pneumatisch

Rückstellfeder
Rutschkupplung
(B.4)

Gebereinheit Rutschkupplung (B)

Kupplungskorb (D.4)

S3

Druckstange (D.1)

Druckplatte (D.2)

Anpressfedern
Kupplung (D.3)

Kupplungsnabe (D.5)

Außenlamelle (D.6)

Innenlamelle (D.7)

Drossel (F)

frei

geschaltet

gedrosselt

ungedrosselt

Schaltventil (G)

S3*

Deckel
Nemerzylinder (C.5)

Anpressfeder
Nehmerkolben (C.4)

Nehmerkolben
Rutschkupplung (C.1)

Nehmerzylinder (C.3)

Nehmerkolben
Handarmatur (C.2)

Kupplung (D)

Nehmerzylinder (C)

Zeichnung 3

EP 1 531 279 A1

Handarmatur komplett (A)

Einstellelement (E)

Gebereinheit Rutschkupplu

Ausgleichsbehälter (A.2)

Geberzylinder Hand (A.1)

Geberkolben Hand (A.4)

Handhebel (A.3)

Rückstellfeder
(A.5)

S2

Anschlag
Einstellelement (E.1)
Kann entweder statisch als Schraube oder
auch variabel (z.B. Ansteuerung elektromechanisch)
ausgeführt sein.

Rückstellfeder
Einstellelement
(E.2)

Kolben
Einstellelement
(E.3)

S1*

Ausgleichsbehälter (B.1)

Geberzylinder
Rutschkupplung (B.2))

Geberkolben Rutschkupplung (B.3)
Betätigung über :
- Mechanik
- Öldruck
- elektromechanisch
- Servopumpen
- pneumatisch

S5

Kupplungskorb (D.4)

S3**=S3+S3*

Druckstange (D.1)

Druckplatte (D.2)

Anpressfedern
Kupplung (D.3)

Kupplungsnabe (D.5)

Außenlamelle (D.6)

Innenlamelle (D.7)

Drossel (F)

frei

geschaltet

gedrosselt

ungedrosselt

Schaltventil (G)

S3*

S3

Rückstellfeder
Rutschkupplung
(B.4)

Deckel
Nemerzylinder (C.5)

Anpressfeder
Nehmerkolben (C.4)

Nehmerkolben
Rutschkupplung (C.1)

Nehmerzylinder (C.3)

Nehmerkolben
Handarmatur (C.2)

Kupplung (D)

Nehmerzylinder (C)

Zeichnung 4

EP 1 531 279 A1

EP 1 531 279 A1

Handarmatur komplett (A)

Ausgleichsbehälter (A.2)

Rückstellfeder
(A.5)

Geberkolben
Rutschkupplung
A.6

Geberzylinder Hand (A.1)

Handhebel (A.3)

Geberkolben Hand (A.4)

Schaltventil (G)

Einstellelement (E)

Anschlag
Einstellelement (E.1)
Kann entweder statisch als Schraube oder
auch variabel (z.B. Ansteuerung
elektromechanisch)
ausgeführt sein.

Rückstellfeder
Einstellelement
(E.2)

S1

Kolben
Einstellelement
(E.3)

Rücklauf geschaltet

Zulauf frei

Kupplungskorb (D.4)

Druckstange (D.1)

Druckplatte (D.2)

Anpressfedern
Kupplung (D.3)

Kupplungsnabe (D.5)

Außenlamelle (D.6)

Innenlamelle (D.7)

gedrosselt

ungedrosselt

Drossel (F)

Deckel
Nemerzylinder (C.5)

Anpressfeder
Nehmerkolben (C.4)

Nehmerkolben
Rutschkupplung (C.1)

Nehmerzylinder (C.3)

Nehmerkolben
Handarmatur (C.2)

Kupplung (D)

Nehmerzylinder (C)

Zeichnung 5

Handarmatur komplett (A)

Ausgleichsbehälter (A.2)

Rückstellfeder
(A.5)

Schaltventil (G)

Einstellelement (E)

Geberkolben
Rutschkupplung
A.6

Anschlag
Einstellelement (E.1)
Kann entweder statisch als Schraube oder
auch variabel (z.B. Ansteuerung
elektromechanisch)
ausgeführt sein.

Geberzylinder Hand (A.1)

S2*

Handhebel (A.3)

S2

Rückstellfeder
Einstellelement
(E.2)

Geberkolben Hand (A.4)

Kolben
Einstellelement
(E.3)

S1

Kupplungskorb (D.4)

S3**=(S3)

Druckstange (D.1)

Rücklauf geschaltet

Zulauf frei

Druckplatte (D.2)

S3

S3*

gedrosselt

ungedrosselt

Drossel (F)

Anpressfedern
Kupplung (D.3)

Deckel
Nemerzylinder (C.5)

Kupplungsnabe (D.5)

S4

Anpressfeder
Nehmerkolben (C.4)

Außenlamelle (D.6)

Nehmerkolben
Rutschkupplung (C.1)

Zeichnung 6

Innenlamelle (D.7)

Nehmerzylinder (C.3)

Nehmerkolben
Handarmatur (C.2)

Kupplung (D)

Nehmerzylinder (C)

14

EP 1 531 279 A1

Handarmatur komplett (A)

Ausgleichsbehälter (A.2)

Rückstellfeder
(A.5)

Schaltventil (G)

Einstellelement (E)

Geberkolben
Rutschkupplung
A.6

Geberzylinder Hand (A.1)

S2*

Anschlag
Einstellelement (E.1)
Kann entweder statisch als Schraube oder
auch variabel (z.B. Ansteuerung
elektromechanisch)
ausgeführt sein.

Handhebel (A.3)

Rückstellfeder
Einstellelement
(E.2)

Geberkolben Hand (A.4)

Kolben
Einstellelement
(E.3)

S1

Kupplungskorb (D.4)

S3**=(S3)=S3*

Druckstange (D.1)

Rücklauf geschaltet

Zulauf frei

Druckplatte (D.2)

Anpressfedern
Kupplung (D.3)

gedrosselt

ungedrosselt

Drossel (F)

S3

S3*

Kupplungsnabe (D.5)

Deckel
Nemerzylinder (C.5)

Anpressfeder
Nehmerkolben (C.4)

Außenlamelle (D.6)

S4

Nehmerkolben
Rutschkupplung (C.1)

Zeichnung 7

Innenlamelle (D.7)

Nehmerzylinder (C.3)

Nehmerkolben
Handarmatur (C.2)

Kupplung (D)

Nehmerzylinder (C)

**Europäisches**
**Patentamt**

**EUROPÄISCHER RECHERCHENBERICHT**

Nummer der Anmeldung

EP 03 02 5844

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | PATENT ABSTRACTS OF JAPAN vol. 014, no. 217 (M-0970), 8. Mai 1990 (1990-05-08) & JP 02 051624 A (YAMAHA MOTOR CO LTD), 21. Februar 1990 (1990-02-21) | 1-5 | F16D25/08 F16D48/04 |
| A | * Zusammenfassung * --- | 6 | |
| X | US 4 986 403 A (TIPTON KENNETH L) 22. Januar 1991 (1991-01-22) * das ganze Dokument * --- | 1-5 | |
| X | DE 38 39 318 A (TEVES GMBH ALFRED) 8. Juni 1989 (1989-06-08) * das ganze Dokument * --- | 1-5 | |
| X | GB 2 264 546 A (AUTOMOTIVE PRODUCTS PLC) 1. September 1993 (1993-09-01) * Anspruch 1; Abbildungen * --- | 1-5 | |
| X | US 5 103 644 A (CADEDDU LEONARDO) 14. April 1992 (1992-04-14) * das ganze Dokument * --- | 1-5 | RECHERCHIERTE SACHGEBIETE (Int.Cl.7) F16D |
| A | JP 2003 294062 A (YAMAHA MOTOR CO LTD) 15. Oktober 2003 (2003-10-15) * Zusammenfassung * ----- | 1,6 | |

Der vorliegende Recherchenbericht wurde für alle Patentansprüche erstellt

| Recherchenort | Abschlußdatum der Recherche | Prüfer |
|---|---|---|
| MÜNCHEN | 1. März 2004 | Foulger, M |

EPO FORM 1503 03.82 (P04C03)

**EP 1 531 279 A1**

**ANHANG ZUM EUROPÄISCHEN RECHERCHENBERICHT**
**ÜBER DIE EUROPÄISCHE PATENTANMELDUNG NR.**      EP 03 02 5844

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-03-2004

| Im Recherchenbericht angeführtes Patentdokument | | Datum der Veröffentlichung | Mitglied(er) der Patentfamilie | | Datum der Veröffentlichung |
|---|---|---|---|---|---|
| JP 02051624 | A | 21-02-1990 | JP | 2648873 B2 | 03-09-1997 |
| US 4986403 | A | 22-01-1991 | KEINE | | |
| DE 3839318 | A | 08-06-1989 | DE | 3839318 A1 | 08-06-1989 |
| GB 2264546 | A | 01-09-1993 | KEINE | | |
| US 5103644 | A | 14-04-1992 | IT | 1240219 B | 27-11-1993 |
| | | | DE | 69103841 D1 | 13-10-1994 |
| | | | DE | 69103841 T2 | 23-02-1995 |
| | | | EP | 0467723 A1 | 22-01-1992 |
| JP 2003294062 | A | 15-10-2003 | KEINE | | |

Für nähere Einzelheiten zu diesem Anhang : siehe Amtsblatt des Europäischen Patentamts, Nr.12/82